# EUROPEAN PATENT APPLICATION

(11) **EP 2 477 006 A1**
(43) Date of publication of application: **18.07.2012**
(21) Application number: 11000308.4
(22) Date of filing: 17.01.2011
(51) Int. Cl.: G01D 5/245, G01D 5/347, G01D 5/244

(54) **High resolution absolute linear encoder**

(71) Applicant: Baader, Thomas, 82291 Mammendorf (DE)
(72) Inventor: Rowe, David, Torrance CA 90503 (US); Riccio, Filippo, 20090 Vimodrone (MI) (IT); Marioti, Ivan, 21042 Caronno Pertusella (VA) (IT); Baader, Thomas, 82291 Mammendorf (DE)

(57) **Abstract**

The invention relates to an absolute linear optical encoder device that is able to measure its position with high resolution using a specifically designed scale in combination with a photoelectric image sensor array which allows the evaluation of the two-dimensional image pattern, and for correction of tilt.

## Description

### SUMMARY OF THE INVENTION

The invention relates to an absolute optical encoder device that is able to measure its position with high resolution using multiple tracks in combination with a photoelectric image sensor array which allows the evaluation of the two-dimensional image pattern. The encoder allows further for correction of tilt of the image sensor.

### THE PRIOR ART

According to the prior art, absolute position measurements are obtained with a scale with a plurality of tracks carrying a binary or Gray-code pattern or vernier scale.

The patent publications US 5,825 307 and JP 08152335 describe linear encoders having a plurality of stripe patterns with different pitch, and individual phototransistors or photodiodes as light sensitive sensors.

When using a linear optical encoder according to the state of the art as described above, the current of the electrical signals fluctuates between a "dark current" and a "light current". The dark current corresponds to when an opaque part of the track on the scale is positioned between the light source and a photodetector. The light current corresponds to the dark current plus current generated by a photodetector when a transparent part of the track on the scale is positioned between the light source and the photodetector. In this way, the modulated light causes the electrical signal to swing continuously from dark current to light current and back, thus generating electrical pulses which are evaluated to determine the position. Multiple tracks are used to carry more bits of information in order to determine an absolute position.

Conversely, high resolution is usually given by interpolation of analog sine-cosine signals that can be obtained with diffraction patterns of coherent light sources.

In contrast to the rotary encoders of the prior art mentioned above, the encoder according to the present invention provides an image of the specific pattern on a two-dimensional image sensor matrix. The images of encoder tracks are digitally processed in order to extract phase signals which are then combined in order to determine an absolute position. The phase signal from each track has a spatial frequency equal to the number of lines in the track, and one or more signals with different frequencies down to a frequency of one period along the range of the encoder (corresponding to absolute position determination) are obtained by difference between phase signals from different tracks. Additionally, image processing can be used for correcting the tilt of the sensor with respect to the pattern.

When comparing subsequent images of the stripe pattern on the image sensor matrix with image processing programs, a high resolution can be obtained, and image shifts can be determined with subpixel precision. Such precision cannot be reached with the encoders of the state of the art, wherein isolated phototransistors or photodiodes are used for recording the image pattern of the individual tracks.

### DESCRIPTION OF DRAWINGS

Fig. 1 is a schematic drawing of the encoder comprising a scale (1) comprising tracks of parallel lines (3) that is able to translate (2), a light emitting device (4), a photoelectric imaging sensor (5) and a computing device (6).
Fig. 2 (2/1 to 2/12) shows various embodiments of the pattern with different numbers of parallel tracks and with or without dividing lines.
Fig. 3 shows the appearance of the pattern as imaged by the sensor, with markings delimiting the zones corresponding to the different tracks of the pattern.
Fig. 4 shows a signal used for determining the position of the dividing lines.
Fig. 5 displays a sample of signals obtained from the different zones of the image sensor.
Fig. 6 shows the phase signals corresponding to different positions with a simplified two-track scale.
Fig. 7 illustrates a technique for narrowing the estimation of the rotation angle.

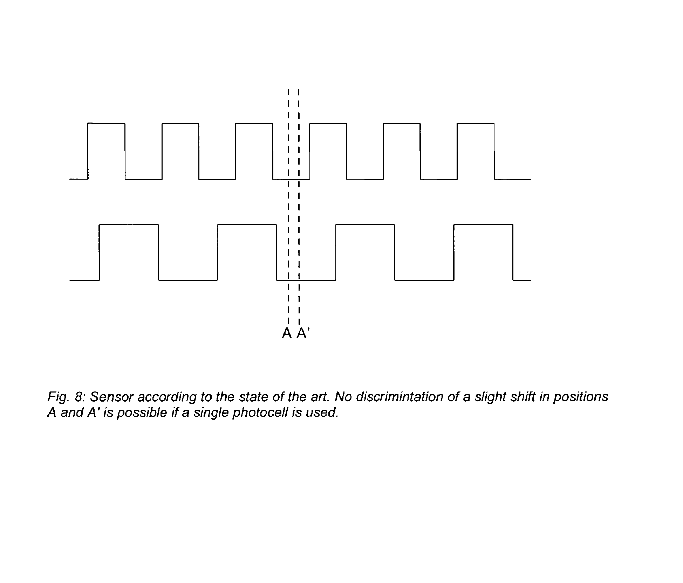

Fig. 8 shows an encoder according to the state of the art with single photocell. It can be seen that a slight shift from A to A' does not change the signal.

### DESCRIPTION OF PREFERRED EMBODIMENTS

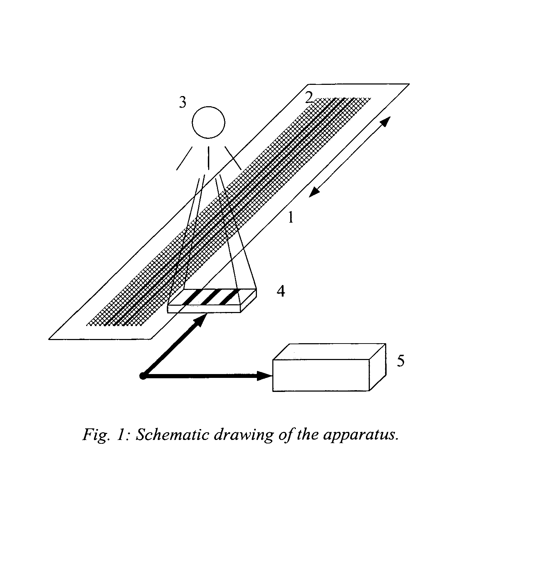

With reference to Fig. 1, a scale (1) having on it a specific pattern (2) as described in detail below, in combination with a light source (3) provides an image of said pattern onto an image sensor array (4). Said image can be processed by a computing device (5) executing a software program that is able to compute the position of the pattern with respect to the sensor from the image data, e.g. using an algorithm as described in the following. The position can be used by the same computing device to perform additional processing, or can be output to another device through an external connection.

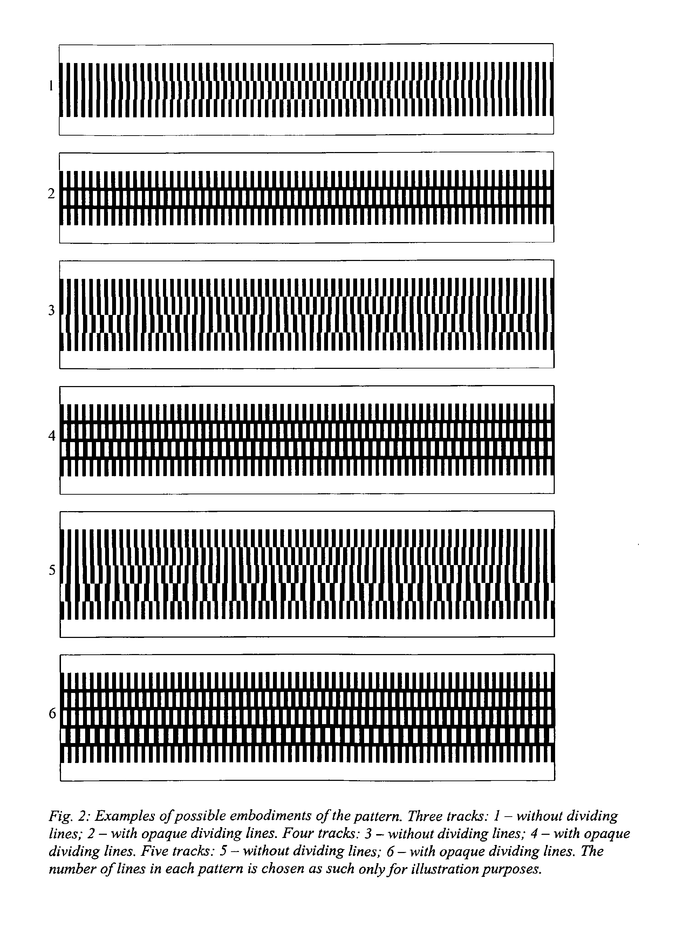

The scale (1), of which some examples of various possible embodiments are shown in Fig. 2/1 to 2/12, contains at least three parallel tracks. Each track is made of alternating transparent and opaque parallel lines. It is essential for the present invention that at least two of the three or more parallel tracks contain the same number of lines, and that the at least one or more remaining tracks contain a number of lines which is different from the number of lines in the beforementioned at least two tracks having the same number of lines.

The pattern may contain more than three parallel tracks, e.g. four, five, six or more. Such additional parallel tracks preferably contain a different number of lines, thereby increasing the precision and robustness of position determination.

The scale may be made of a transparent polymer or glass carrier, onto which a line pattern is printed or etched. Alternatively, the scale may be made from opaque materials such as metal vapour deposition, opaque polymers, metallized glass or polymers or similar, into which slits or openings are cut or etched.

Optionally and preferably, the parallel tracks are separated from neighbouring tracks by opaque or clear dividing lines. These dividing lines assist to find the boundaries and limits of the individual tracks in the image pattern, and thus assist the evaluation of the image with respect to displacement of the image sensor. No separations are required if fixed or predetermined boundaries or areas in the image zones are used by the evaluation software.

Again with reference to Fig. 1, the light emitting device (3) may be selected from bulbs or light emitting diodes (LED). The light emitting device may emit poly- or monochromatic light. It may burn continuously, in particular if low rotational speeds are involved, or if mechanical or electronic shutters are used with the image sensor. In specific embodiments, it may be advantageous that the light emitting device is flashed or triggered for an appropriate amount of time synchronous with the image acquisition by the image sensor, in order to minimize the motion blur at the expected translation speed. Alternatively, the motion blur may also be controlled using a mechanical or electronic shutter on the image sensor.

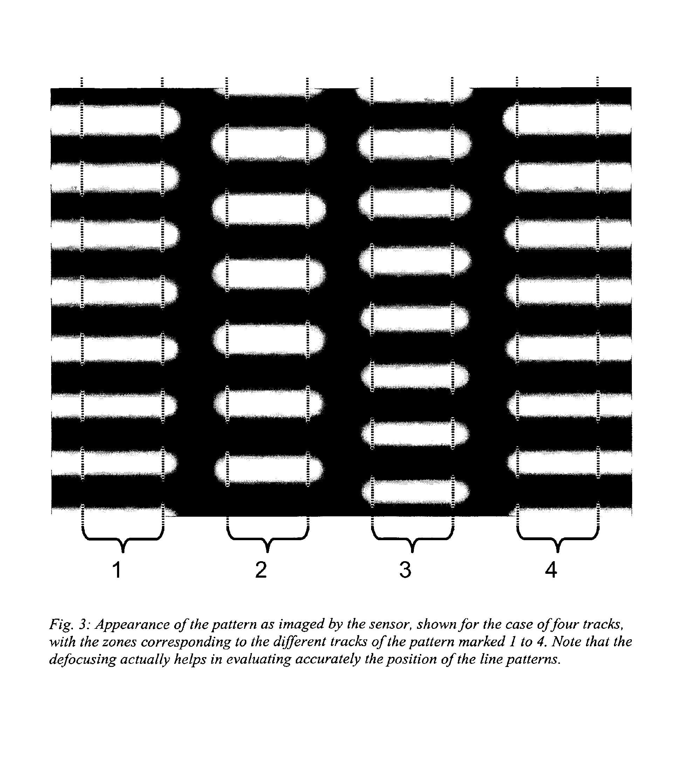

The light emitting device is facing the image sensor (4) with the pattern on the scale between them. The distance from the image sensor to the scale and to the light emitting device is chosen so that a slightly defocused image of the pattern can be acquired with the sensor: A slight defocusing of the image pattern formed on the light sensitive matrix may improve the accuracy of the positions of the line patterns (cf. figure 3). Additional optical systems such as focusing lenses, collimators, etc. may be employed between the light source and the image sensor to improve the image on the image sensor. Alternatively the light emitting device can be mounted in the vincinity or on the same mounting holder as the sensor and the light emitted through the scale can be directed by a mirror or mirror systems back onto the imaging sensor. Another alternative is mounting the light emitting device in any available position and direct the light onto the imaging sensor using optical systems such as optical fibers.

Any image sensor capable of recording two-dimensional images is suitable in the present invention, for example a matrix of photodetectors. Single photocells or a single linear CCD would not be suitable as image sensors in the present invention since such photodetectors cannot record a two-dimensional pattern but only a linear brightness distribution. Suitable image sensors in the present invention are for example CCD or CMOS arrays. Alternatively, multiple linear photoelectric sensors can be used, provided that each relevant track of the pattern is imaged by at least one sensor oriented parallel to the tracks.

If using a matrix image sensor, the image sensor is ideally aligned so that the tracks are oriented in the direction of the sensor's columns.

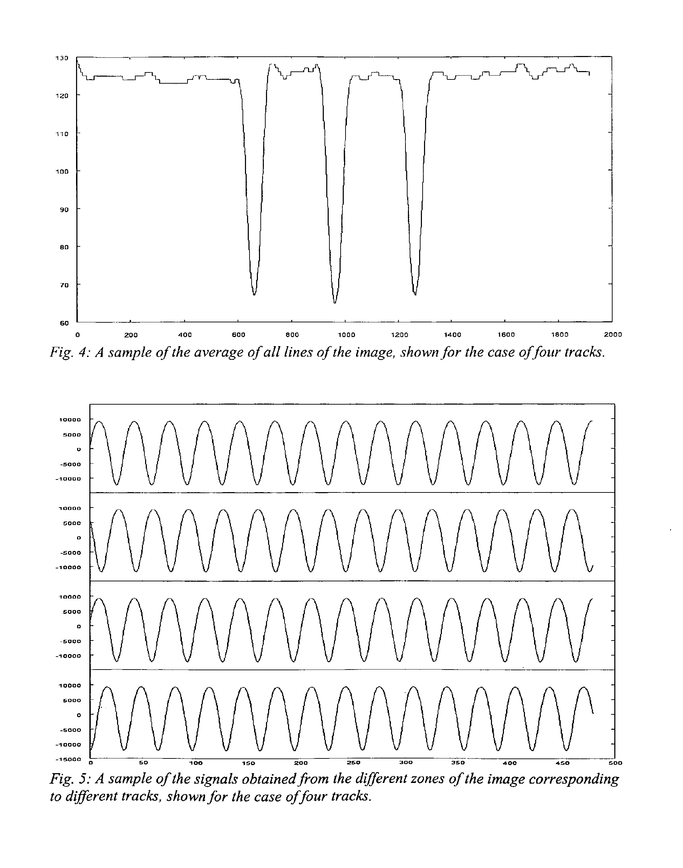

The measurement of the absolute position of the scale pattern with respect to the sensor is obtained by making measurements on signals such as those shown in FIG. 4 and FIG.5.

The signal of FIG. 4, used only when dividing lines are implemented, can be obtained by image processing, for example by averaging all the lines of the matrix image sensor. This signal is further processed to further define the position of the zones of the image sensor where the image of the relevant tracks of the pattern is formed.

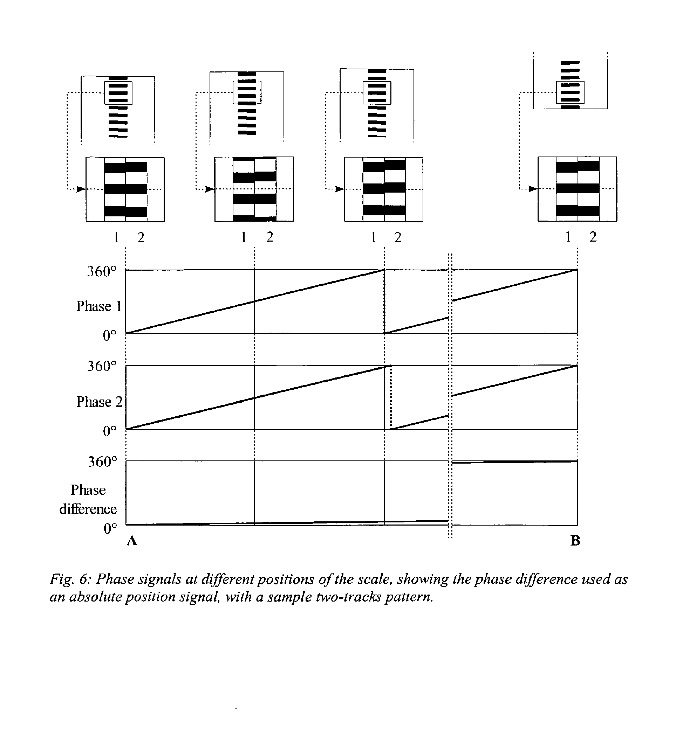

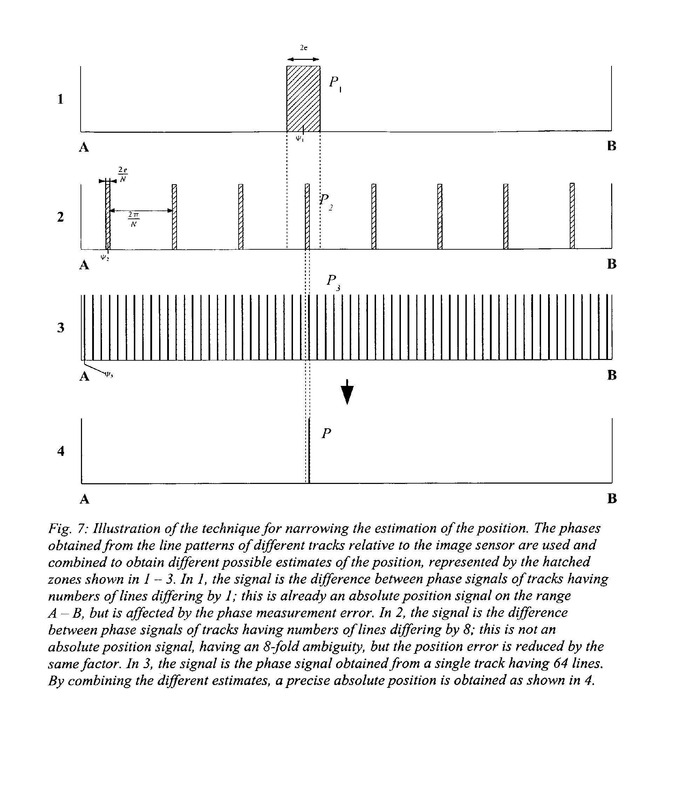

The signals of FIG. 4 are obtained for each track of the pattern, by image processing, averaging all the columns in each relevant zone of the image sensor, or, if multiple linear photoelectric sensors are used, directly from the ones dedicated to this task. These signals are further processed to obtain, for each track, the position of the lines pattern with respect to the sensor. As shown in FIG. 6, this results in a series of phase signals, one for each different track. Each signal has a spatial period which is a fraction of the entire range of the scale by a factor equal to the number of lines in the track. By computing the difference of the phases of two different tracks, the result is the phase of a signal whose period is a fraction of the entire range of the scale by a factor equal to the difference in the number of lines of the two tracks. In this way, by computing the difference of phases from tracks whose number of lines differs by 1, it is possible to obtain a signal having a period equal to a complete translation of the scale, i.e. an absolute position signal. With a given error on the phase measurement, the resulting error of the position signal will be proportional to the period, even if the phase signal is obtained as the difference of different signals. This means that a signal having the entire range as a period will be affected by a large error. By combining this signal with a phase signal obtained from a single track, it is possible to obtain high resolution, limited only by the signal-to-noise ratio of the phase signal obtained by image-processing, and absolute positioning. In a preferred embodiment, difference between different pairs of these phase signals are evaluated, and each pair gives a set of possible angle values such as those shown in FIG. 7/1 to 7/3; these possible angle values are then combined in such a way to narrow the possible angle to a small range as shown in FIG. 7/4.

Furthermore, the measured phase signals obtained from the abovementioned tracks having the same number of lines are compared to evaluate the tilt of the sensor with respect to the pattern, so that the errors in the measured phase signals corresponding to the other tracks can be corrected, effectively correcting any error that can arise from the tilt of the sensor.

In order to perform the image processing and data analysis, the image data provided by the image sensor may be output to an external computing device (FIG. 1/5) where the pattern is evaluated for computing the position. In a preferred embodiment, the computing device is integrated into the encoder, e.g. on an electronic circuit board or in a non-volatile ROM, and performs the abovementioned tasks.

The computing device processes the acquired image, executing a software program that is able to compute the position of the scale from the image data, using suitable algorithms. This position can be used by the same computing device to perform additional processing, or can be output to another device or a computer through an external connection.

### Fields of application

The encoder according to the present invention allows for precise control of industrial production machines / robots and motion control, for example in the automotive industry, plotters and three-dimensional measuring machines.

## Claims

1. A absolute linear optical encoder comprising:
- a light emitting device (4),
- a scale (1),
wherein the scale comprises at least three parallel tracks (3) of alternating transparent and opaque lines,
wherein, in each parallel track, all the lines have the same width and
separation;
wherein at least two of the parallel tracks contain the same number of lines,
and the number of lines in at least one further parallel track
is different from the number of lines in the beforementioned two parallel tracks; wherein at least one parallel track has a number of lines differing by one with respect to at least one other parallel track;
wherein the parallel tracks are optionally separated by opaque or clear dividing lines;
- a photoelectric imaging sensor (5) capable of recognising two-dimensional patterns, aligned in a way that the tracks are essentially oriented in direction of the sensor's lines, or alternatively, aligned in a way that the tracks are in direction of the sensor's.

2. The encoder according to claim 1 further comprising a computing device for image processing.

3. The encoder according to claim 2, wherein the computing device is integrated into the circuit board of the sensor electronics.

4. The encoder according to claim 2, wherein the computing device is not integrated into the circuit board of the sensor electronics.

5. The encoder according to any previous claim wherein the photoelectric image sensor is a CCD array or a CMOS array.

6. The encoder according to any previous claim wherein the photoelectric image sensor consists of multiple linear photoelectric sensors.

7. The encoder according to any previous claim comprising an additional optical system for image acquisition.

8. The encoder according to any previous claim wherein the parallel tracks are separated by opaque or clear dividing lines.

9. The encoder according to any previous claim comprising a mechanical or electronic shutter, or means for flashing or strobeing the light emitting device for controlling image motion blur.

10. The encoder according to any previous claim, wherein an imperfect realization of the pattern on the scale is corrected by means of a mapping from the measured position to another position, previously measured with another method, and stored in a non-volatile memory.

11. A method of measuring the position of a translating device, comprising the following steps:
- providing on a two-dimensional image sensor array an image of an encoder scale according to claim 1;
- extracting phase signals from the image of each parallel track by means of image-processing techniques;
- optionally comparing the phase signals obtained from two parallel tracks having the same number of lines as reference for correcting the effect of sensor tilt on the phase signals of all parallel tracks;
- calculating the absolute position using the beforementioned phase signals and their differences.
